# EUROPÄISCHE PATENTSCHRIFT

(11) **EP 2 079 287 B1**
(45) Veröffentlichungstag und Bekanntmachung des Hinweises auf die Patenterteilung: **14.08.2013**
(21) Anmeldenummer: 09000421.9
(22) Anmeldetag: 14.01.2009
(51) Int. Cl.: H05B 41/26, H02M 7/538

(54) **Elektronisches Vorschaltgerät mit Strommesseinrichtung, Verfahren zu seiner Steuerung und Beleuchtungsgerät**
Electronic pre-switching device with energy measuring device, control method and lighting device
Appareil de montage électronique doté d'un dispositif de mesure du courant, son procédé de commande et appareil d'éclairage

(30) Priorität: 14.01.2008 DE 102008004399
(43) Veröffentlichungstag der Anmeldung: 15.07.2009
(73) Patentinhaber: BAG engineering GmbH, 59759 Arnsberg (DE)
(72) Erfinder: Wiebe, Peter, Dr., 40474 Düsseldorf (DE); Meyer, Otto, 32351 Stemwede (DE)
(74) Vertreter: Lippert, Stachow & Partner

(56) Entgegenhaltungen:
- EP-A2- 0 555 702
- EP-A2- 0 631 145
- EP-A2- 1 696 713
- WO-A1-96/38024
- US-A- 5 315 498
- US-A1- 2008 106 252
- US-B1- 6 683 422

## Beschreibung

Die Erfindung betrifft ein elektronisches Vorschaltgerät zum Betreiben zumindest einer insbesondere als Hochdruckentladungslampe ausgebildeten Lampe, mit einem zumindest einen Schalttransistor aufweisenden Wandler, welcher mittels eines Schaltbetriebs des Transistors zur Erzeugung einer in ihrer Polarität an der Lampe wechselnden Spannung ausgebildet ist, mit wenigstens einer Drossel sowie mit einer einen Stromwandler aufweisenden Strommesseinrichtung zur Erfassung des Lampenstroms. Weiterhin betrifft die Erfindung ein insbesondere mit einer als Hochdruckentladungslampe ausgebildeten Lampe versehenes Beleuchtungsgerät mit einem solchen Vorschaltgerät.

Für eine elektrische Lampe, insbesondere eine Hochdruckentladungslampe wird eine in ihrer Polarität wechselnde Versorgungsspannung zur Verringerung der Abnutzung der Lampenelektroden benötigt. Der Mittelwert des Lampenstroms, der für die Strom- und Leistungsregelung benutzt wird, kann durch den Mittelwert des Drosselstroms ermittelt werden. Der Peakwert des Drosselstroms ist für Sicherheitsabschaltungen und ebenfalls Regelungsverfahren wichtig. Für die Messung des Drosselstroms, der sich aus dem Strom durch den zumindest einen Schalttransistor ergibt, können Stromwandler verwendet werden. Der Stromwandler der gattungsgemäßen Vorrichtung ist mit seiner zumindest einen Primärspule beispielsweise direkt zwischen Drossel und Transistor geschaltet.

Die Erfassung von Strömen wechselnder Polarität ist für die Verarbeitung des Stromsignals jedoch unerwünscht. Es ist daher wichtig, die Form und Polarität des gemessenen Signals unabhängig von der alternierenden Gleichspannungsversorgungsquelle zu erhalten. Hierfür wird die Sekundärspule des Stromwandlers in der Sekundärschaltung in vergleichsweise aufwendige und teure Gleichrichterschaltungen, beispielsweise aus einer Vielzahl von Dioden bestehende Vollbrückengleichrichter, integriert. Die Spannungsabfälle an diesen Dioden führen jedoch zu einer ungenauen Regelung und einer unsicheren Abschaltung des Lampenstroms.

Die Offenlegungsschrift EP 0 631 145 A2 betrifft eine Vorrichtung zur Strommessung in Brückenschaltungen, wobei in einem Brückenzweig zwei getrennte Strommesseinrichtungen umfasst sind, die jeweils als Strommesstransformator ausgebildet sind und in den Strompfaden von zwei übereinander liegenden Leistungsschaltern angeordnet sind.

Aufgabe der vorliegenden Erfindung ist es daher mit minimalem Aufwand eine form-, amplituden-, und/oder phasengenaue Stromauswertung zu realisieren.

Die Aufgabe wird gelöst durch ein elektronisches Vorschaltgerät gemäß Anspruch 1 sowie ein Beleuchtungsgerät gemäß Anspruch 9.

Durch die Verwendung eines Stromwandlers umfassend zwei Primärspulen, die jeweils über eine den Primärspulen zugeordnete Diode entkoppelt und seriell zur Drossel geschaltet kann auf eine in der Sekundärschaltung vorhandene aufwendige und teure Gleichrichterschaltung, wie beispielsweise aus einer, eine Vielzahl von Dioden bestehenden Vollbrückengleichrichter verzichtet werden. Die in Serie geschalteten Spulen (Drossel und Primärspule/-wicklung) sind über die Diode hinsichtlich der variierenden Versorgungsspannung entkoppelt. Die Phase, die Form und der Wert des Messsignals ist unabhängig von der Polarität der alternierenden Gleichspannungsversorgung. Der Spannungsabfall über die Diode auf der Primärspulenseite, dass heißt auf der Strommessseite, ist vernachlässigbar. Günstige und dennoch stromfeste Dioden sind verwendbar. Die Sekundärschaltung ist hierbei Teil des elektronischen Vorschaltgeräts und nicht notwendigerweise von der Versorgung der Lampe getrennt.

Die Sekundärschaltung, die einen Teil des Stromwandlers umfasst, weist vorzugsweise einen Messwiderstand (Shunt) und zumindest eine Sekundärspule auf. Aufgrund der Verlagerung der Dioden aus dem Bereich der Sekundärspule hin zur Primärspule stört kein Spannungsabfall über Gleichrichterschaltungen die Messung in der Sekundärschaltung am Shunt. Eine solche Strommessung kann auch bei sonstigen alternierenden versorgungsspannungen eingesetzt werden.

Fehlerhafte Zustandsverfassungen durch gleichzeitig zwei Primärspulen fließende Ströme werden bei dem erfindungsgemäßen Vorschaltgerät vermieden. Die seriell zur Drossel und parallel zueinander angeordneten Primärspulen ermöglichen eine kontinuierliche Strommessung. Beispielsweise ist der Anfang der zweiten Primärwicklung mit dem Ende der ersten Primärwicklung und der Anfang der ersten Primärwicklung mit der Kathode der ersten Diode geschaltet. Gleichzeitig ist das Ende der zweiten Primärwicklung entsprechend mit der Anode der zweiten Diode und die Anode der ersten Diode mit der Kathode der zweiten Diode verbunden. Es versteht sich, dass die Schaltung auch anders aufgebaut sein kann.

Die den Primärwicklungen zugeordneten Dioden können vorzugsweise Schottky-Dioden sein, die sich aufgrund ihrer Schnelligkeit und ihren kleineren Verlusten anbieten.

Der von der Speicher- und/oder Auswerteeinheiten aufweisenden Strommesseinrichtung gemessene Peakwert des Stroms wird zur Bestimmung des Abschaltpunktes der Transistoren verwendet, wobei bei einem Strom von beispielsweise 1 A die Auflösung im Bereich von wenigen mA liegt.

Sofern der von den Primärwicklungen zu messende Strom einen Nulldurchgang aufweist bzw. Null wird, kann über der Sekundärwicklung eine vergleichsweise hohe Spannung von beispielsweise rund 50 Volt anfallen. Die in der Sekundärschaltung noch vorhandenen Dioden sind daher spannungsfest auszubilden und entsprechend teuer. In einer bevorzugten Ausgestaltung ist das elektronische Vorschaltgerät daher mit einer Sekundärschaltung versehen, die parallel zu der Sekundärspule zwei seriell angeordnete Dioden aufweist, von denen eine vorzugsweise eine Zener-Diode ist. Die Dioden sind vorzugsweise gegenläufig geschaltet und begrenzen die von der Sekundärspule in die Sekundärschaltung eingeführte Spannung. Es können daher in der Sekundärschaltung günstigere Dioden verbaut werden.

Vorteilhafterweise umfasst das elektronische Vorschaltgerät einen Brückenwandler zur Erzeugung einer Versorgungsleistung der Lampe. Der Brückenwandler weist hierbei zumindest zwei Schalttransistoren auf, die die Lampe mit einer alternierenden Spannung versorgen. Die Primärspule ist an den Mittenabgriff des insbesondere als Halbbrückenwandler ausgebildeten Brückenwandlers zwischen den beiden Schalttransistoren angeschlossen. Gleiches gilt einenends für die Lampe, die anderenends über zwischengeschaltete Kapazitäten an den beiden Versorgungsästen des elektronischen Vorschaltgeräts anliegt. An diesem Ende liegt daher ein Potential zwischen den beiden Versorgungsästen an. Die Primärspule befindet sich auf Seite der Schalttransistoren und nimmt somit die durch deren Schaltung erzeugte Spannung auf.

Alternativ können an Stelle der Kapazitäten auch Schalttransistoren vorgesehen sein. Die so ausgebildete Vollbrücke versorgt über die Diagonalbrücke die Lampe mit höherer Spannung, ist jedoch durch die Verwendung zweier Transistoren teurer. Eine Halbbrückenschaltung führt unter Verwendung der genau messenden und dennoch günstigen Strommesseinrichtung zu einem entsprechend kostengünstigen Vorschaltgerät mit Strommesseinrichtung.

Gemäß einer weiteren Ausbildung der Erfindung ist die Sekundärschaltung des elektronischen Vorschaltgeräts, also die Sekundärspule mit zugehörigem Messshunt, auf einer der Primärspule entgegen gesetzten Seite des Beleuchtungsgeräts am Mittenabgriff des Brückenwandlers geschaltet. Dies weist je nach Realisierung der Schaltung Vorteile auf und kann aufgrund der Potentialtrennung der Sekundärschaltung ohne Weiteres vorgenommen werden.

Besonders vorteilhaft ist das elektronische Vorschaltgerät mit einer Sekundärschaitung versehen, die auf einem der Versorgungsäste zur Versorgung der Lampe, vorzugsweise der Hochdrucklampe, geschaltet ist. Hier bietet sich insbesondere das Nullpotential an. Je nach gewünschter Bauweise kann die Sekundärschaltung auch auf dem ein höheres Potential aufweisenden Versorgungsast angeordnet sein.

Ein erfindungsgemäßes elektronisches Vorschaltgerät weist vorteilhafterweise zur Erfassung eines Mittelwerts der in der Sekundärschaltung anfallenden Spannung und der hieraus erfolgenden Berechnung des mittleren Lampenstroms ein an dem Messshunt angeordnetes RC-Glied, bzw. einen RC-Filter als Tiefpassfilter auf. Die Erfassung des Mittelwerts wird demnach über einfache und kostengünstige Bauteile realisiert.

Ein elektronisches Vorschaltgerät ist insbesondere mit einer der Halb- oder Vollbrücke zugeordneten Leistungsfaktorkorrekturschaltung, im einfachsten Fall einem einfachen Hochsetzer, zur Erzeugung der Versorgungspotentiale versehen. Die Schaltung einer gegebenenfalls vorhandenen Brückenschaltung wird vorzugsweise über bekannte Mikrokontroller oder entsprechende Schaltungen bewirkt.

Die Aufgabe wird des Weiteren gelöst durch ein Beleuchtungsgerät gemäß Anspruch 9, welches vorzugsweise eine Hochdruckentladungslampe aufweist. Das Beleuchtungsgerät umfasst ein elektronisches Vorschaltgerät wie vorbeschrieben. Das Beleuchtungsgerät baut aufgrund der einfachen Schaltung günstiger und ist präziser zu regeln und zu schalten. Dies ist insbesondere für die derzeit noch oftmals im Vergleich zu herkömmlichen Lampen teureren Hochdruckentladungslampen vorteilhaft.

Beim Betrieb eines erfindungsgemäß ausgebildeten elektronischen Vorschaltgeräts für eine insbesondere als Hochdruckentladungslampe ausgebildete Lampe mit einem zumindest einen Schalttransistor aufweisenden Wandler erzeugt dieser mittels eines Schaltbetriebs des Transistors eine in ihrer Polarität an der Hochdruckentladungslampe wechselnde Spannung. Der Lampenstrom wird über eine zugehörige Drossel begrenzt und mittels einer einen Stromwandler aufweisenden Strommesseinrichtung erfasst. Die Drossel ist hierbei gleichzeitig Teil des Tiefsetzers zur Bereitstellung der korrekten Lampenspannung.

Der Stromwandler verfügt wie vorbeschrieben über zwei parallel angeordnete Primärspulen, die jeweils über eine Diode entkoppelt und in Serie zu der Drossel geschaltet sind, sodass eine kontinuierliche Strommessung bereitgestellt wird, bei der ein Messsignal in eine Sekundärschaltung umfassend eine Sekundärspule eingeleitet wird zum form-, phasen- und/oder amplitudengenauen Erfassen des Lampenstroms. Der Stromwandler ist somit Teil der Primärschaltung und Teil der Sekundärschaltung. Die Entkoppelung der zumindest einen Primärspule von der Drossel und die Verlagerung eines Teils der für die Messung benötigten Dioden aus der Sekundärschaltung in den Primärkreis verbessert die Abbildung des Drosselstroms.

Weitere Einzelheiten und Vorteile der Erfindung lassen sich der nachfolgenden Figurenbeschreibung entnehmen. In den schematischen Abbildungen zeigt:
- Fig. 1: Messdaten einer Strommesseinrichtung eines elektronischen Vorschaltgeräts nach dem Stand der Technik,
- Fig. 2: eine Schaltung eines Ausführungsbeispiel mit einer Hochdruckentladungslampe,
- Fig. 3: Messdaten des Gegenstands nach Fig. 2.

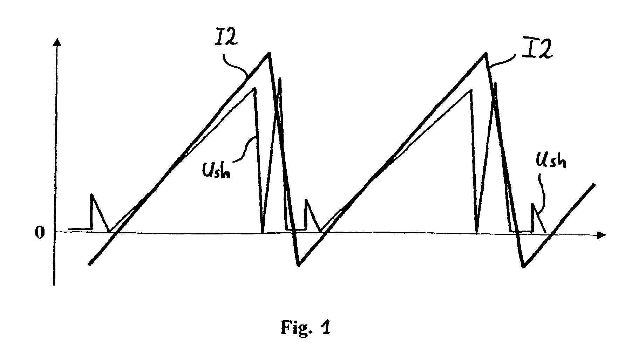

Für ein Vorschaltgerät nach dem Stand der Technik ist in Fig. 1 der Drosselstrom I2 und die Spannung Ush am Messwiderstand bzw. Shunt über der Zeit aufgetragen. Sofern ein Transistor des Vorschaltgeräts nach einer Geschlossenstellung in eine Offenstellung übergeht, sinkt der Strom über die Drossel und ändert sein Vorzeichen. Die Spannung am Shunt folgt nicht mehr dem Strom. Die auf Seiten der Drossel im Primärkreis befindliche Primärwicklung, parasitäre Kapazitäten und die im Messkreis des Shunts befindliche Gleichrichter führen zu dem gezeigten Verlauf der Spannung Ush. Dies führt zu einer fehlerhaften Erfassung der tatsächlichen Betriebszustände des Vorschaltgeräts und einer zugehörigen Lampe.

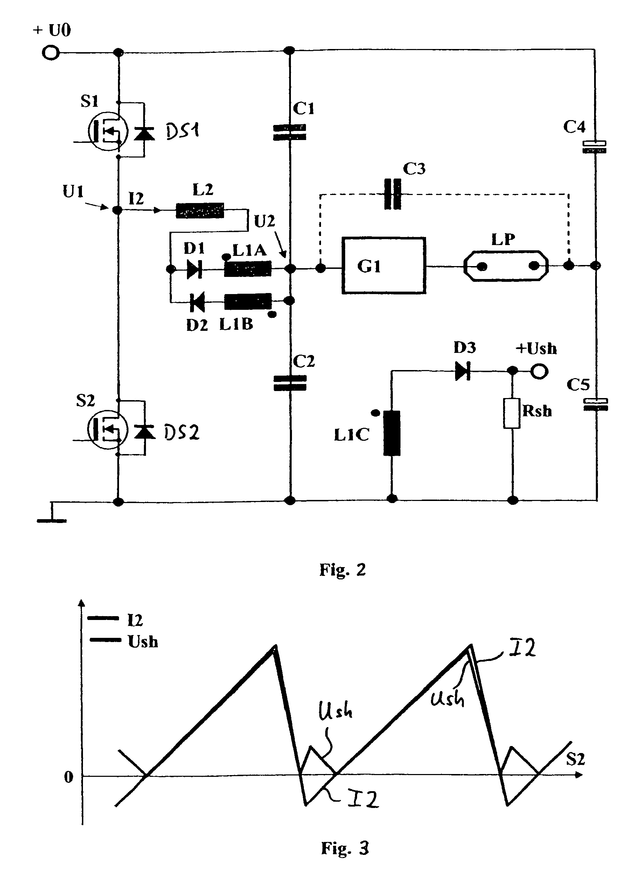

Ein Ausführungsbeispiel (eines Teils) einer Schaltung eines erfindungsgemäßen Vorschaltgeräts bzw. eines erfindungsgemäßen Beleuchtungsgeräts gemäß Fig. 2 hingegen führt zu einer form-, amplituden- und phasengenauen Messung gemäß Fig. 3. Die Lampe ist aufgrund der verbesserten Auswertung ihres Betriebszustandes deutlich besser regelbar. Der Drosselstrom I2 und die Spannung Ush am Shunt kongruieren bzw. verlaufen im Bereich negativen Stroms 12 entgegengesetzt analog.

Die erfindungsgemäße Schaltung gemäß Fig. 2 zeigt eine Lampe LP, die in eine Halbbrückenschaltung integriert ist. Während der in der Fig. rechte Pol der Lampe LP über die beiden Kondensatoren C4 und C5 ein Potential in der Mitte der beiden Versorgungsäste aufweist, wird der in der Fig. linke Pol der Lampe LP über zwei Schalttransistoren S1 und S2, beispielsweise MOSFETs, über die Drossel L2 zwischen den Potentialen der beiden Versorgungsäste hin- und hergeschaltet. Als Versorgungsspannung dient eine Gleichspannung U0 zwischen den beiden Versorgungsästen von z.B. 400 V. U0 wird vorzugsweise durch Gleichrichtung von Netzspannung und Leistungsfaktorkorrektur erzeugt. Zwischen den Polen der Lampe LP liegt eine in ihrer Polarität niederfrequent wechselnde Gleichspannung U2 - U0/2 in der Größenordnung von beispielsweise 75 V - 200 V an.

Die Zwischenkreisspannung wird über einen Tiefsetzsteller aus einem Schalttransistor (S1), einer Drossel L2 und einem Filterkondensator auf die benötigte Lampenbrennspannung reduziert. Die Kapazität des Filterkondensators ergibt sich im Ausführungsbeispiel aus der Gesamtkapazität der Kondensatoren C1 - C3. Der Mittelwert des Lampenstroms I2 kann durch Messung des Mittelwertes des Drosselstroms I2 ermittelt werden.

Der Zünder G1 erzeugt in an sich bekannter Weise eine Zündspannung, wobei gleichzeitig der Kondensator C3 für eine Entstörung der Schaltung während der Zündung sorgt. L2 liegt seriell zu der Lampe LP. zwischen L2 und LP sind parallel zueinander zwei Primärwicklungen eines Stromwandlers geschaltet. Seide Primärwicklungen L1A und L1B haben eine niedrige Windungszahl. L1A und L1B ist jeweils eine Diode (D1 oder D2) zugeordnet, die den Strom betrachtet auf die Abnahmepunkte für die Spannungen U1 und U2 den Strom in unterschiedliche Richtungen durchlassen.

In der Sekundärschaltung mit der Sekundärwicklung L1C des Stromwandlers kann erfindungsgemäß auf komplexe Gleichrichterschaltungen verzichtet werden, da die beiden Primärspulen des Stromwandlers durch die Dioden entkoppelt im Primärkreis angeordnet sind. Die Spannung Ush am Messwiderstand/Shunt Rsh verläuft zum Teil entgegengesetzt analog zum Drosselstrom 12 (vergl. Fig. 3), ist immer gleichgerichtet und damit von dem Vorzeichen des Drosselstroms unabhängig. D3 kann beispielsweise als Schottky-Diode ausgebildet sein. Am Messpunkt von Ush ist zur Mittelwertmessung vorzugsweise ein RC-Glied bestehend aus Kondensator und widerstand angeordnet. Die Sekundärschaltung kann beispielsweise auch zwischen C4 und C5 oder C4 und S1 angeordnet sein.

Den Transistoren S1 und S2 sind Freilaufdioden DS1 und DS2 zugeordnet, über die nach Öffnen des jeweils anderen Schalters der Strom durch L2 kurzfristig aufrecht erhalten wird. Den Transistoren S1 und S2 können zusätzlich Kondensatoren zur Verringerung der Belastung während des Schaltens zugeordnet.

## Patentansprüche

1. Elektronisches Vorschaltgerät zum Betreiben zumindest einer insbesondere als Hochdruckentladungslampe ausgebildeten Lampe (LP), mit einem zumindest einen Schalttransistor (S1, S2) aufweisenden Wandler, welcher mittels eines Schaltbetriebs des Transistors (Sl, S2) zur Erzeugung einer in ihrer Polarität an der Lampe (LP) wechselnden Spannung (U2) ausgebildet ist, mit wenigstens einer Drossel (L2) sowie mit einer einen Stromwandler aufweisenden Strommesseinrichtung zur Erfassung des Lampenstroms, **dadurch gekennzeichnet, dass** der Stromwandler zwei parallel zueinander angeordnete Primärspule (L1A, L1B) aufweist, die jeweils über eine den Primärspulen zugeordnete Diode (D1, D2) entkoppelt und in Serie zu der Drossel (L2) geschaltet sind, um den Lampenstrom in einer der Strommesseinrichtung zugeordneten Sekundärschaltung form-, phasen- und/oder amplitudengenau zu erfassen, wobei die Sekundärschaltung eine Sekundärspule (L1C) umfasst.

2. Elektronisches Vorschaltgerät nach Anspruch 1, **dadurch gekennzeichnet, dass** die Sekundärschaltung parallel zur Sekundärspule (L1C) geschaltete Dioden aufweist, von denen eine eine Zener-Diode ist.

3. Elektronisches Vorschaltgerät nach einem der vorherigen Ansprüche, **dadurch gekennzeichnet, dass** der Wandler als Brückenwandler, insbesondere als Halbbrückenwandler ausgebildet ist.

4. Elektronisches Vorschaltgerät nach Anspruch 3, **dadurch gekennzeichnet, dass** die Sekundärschaltung auf einer der Primärspule (L1A, L1B) entgegen gesetzten Seite der Lampe am Mittenabgriff des Brückenwandlers geschaltet ist.

5. Elektronisches Vorschaltgerät nach Anspruch 3, **dadurch gekennzeichnet, dass** die Sekundärschaltung auf einen der Versorgungsäste geschaltet ist.

6. Elektronisches Vorschaltgerät nach einem der vorherigen Ansprüche, **dadurch gekennzeichnet, dass** zur Erfassung eines Mittelwerts des Lampenstroms in der Sekundärschaltung ein RC-Glied vorgesehen ist.

7. Elektronisches Vorschaltgerät nach einem der vorherigen Ansprüche, **gekennzeichnet durch** eine dem Wandler zugeordnete Leistungsfaktorkorrekturschaltung zur Erzeugung der versorgungspotentiale.

8. Elektronisches Vorschaltgerät nach einem der vorherigen Ansprüche, **gekennzeichnet durch** eine Steuerschaltung zum Betrieb der Lampe (LP).

9. Beleuchtungsgerät, vorzugsweise mit einer Hochdruckentladungslampe, **gekennzeichnet durch** ein elektronisches Vorschaltgerät nach einem der vorherigen Ansprüche.

## Claims

1. Electronic ballast for operating at least one lamp (LP) constructed in particular as a high pressure discharge lamp having a converter comprising at least one switching transistor (S1, S2), which is configured for generating a voltage (U2) variable in its polarity at the lamp (LP) by means of a switching operation of said transistor (S1, S2), comprising at least one choke (L2) and a current measuring device including a current converter for detecting the lamp current, **characterized in that** the current converter includes two primary coils (L1A, L1B) disposed parallel to each other, which are each decoupled via a diode (D1, D2) assigned to said primary coils and which are connected in series with said choke (L2), for exactly detecting the lamp current with respect to shape, phase and/or amplitude in a secondary circuit assigned to the current measuring device, wherein said secondary circuit comprises a secondary coil (L1C).

2. Electronic ballast according to claim 1, **characterized in that** said secondary circuit comprises diodes, which are connected in parallel with the secondary coil (L1C), one of which being a Zener diode.

3. Electronic ballast according to one of the preceding claims, **characterized in that** the converter is constructed as a bridge converter, in particular as a half-bridge converter.

4. Electronic ballast according to claim 3, **characterized in that** the secondary circuit is connected at a side of the lamp opposite to the primary coil (L1A, L1B), at the center tapping of the bridge converter.

5. Electronic ballast according to claim 3, **characterized in that** the secondary circuit is connected to one of the supplying branches.

6. Electronic ballast according to one of the preceding claims, **characterized in that** for the detection of an average value of the lamp current, a RC circuit is provided in the secondary circuit.

7. Electronic ballast according to one of the previous claims, **characterized by** a power factor correction circuit assigned to the converter, for generating supply potentials.

8. Electronic ballast according to one of the preceding claims, **characterized by** a control circuit for operating the lamp (LP).

9. Lighting device, preferably comprising a high pressure discharge lamp, **characterized by** an electronic ballast according to one of the previous claims.

## Revendications

1. Ballast électronique pour opérer au moins une lampe (LP) configurée en particulier comme une lampe à décharge à haute pression avec un convertisseur comprenant au moins un transistor de commutation (S1, S2), convertisseur qui est configuré pour la génération d'une tension (U2) variable en sa polarité à la lampe (LP) par voie d'un mode de commutation dudit transistor, comprenant au moins une bobine d'arrêt (L2) ainsi qu'un dispositif de mesure du courant avec un convertisseur de courant pour détecter le courant de la lampe, **caractérisé en ce que** le convertisseur de courant présente deux bobines primaires (L1A, L1 B) qui sont disposées de manière parallèle l'une par rapport à l'autre et qui sont découplées chacune par une diode (D1, D2), associée aux bobines primaires, et qui sont couplées en série avec la bobine d'arrêt (L2), pour détecter dans un circuit secondaire associé au dispositif de mesure du courant le courant de la lampe d'une manière précise quant à la forme, phase et/ou l'amplitude, ledit circuit secondaire comprenant une bobine secondaire (L1C).

2. Ballast électronique selon la revendication 1, **caractérisé en ce que** le circuit secondaire comporte des diodes couplées en parallèle avec la bobine secondaire (L1C), l'une des diodes étant une diode Zener.

3. Ballast électronique selon l'une des revendications précédentes, **caractérisé en ce que** le convertisseur est configuré comme un convertisseur en pont, notamment comme un convertisseur en demi-pont.

4. Ballast électronique selon la revendication 3, **caractérisé en ce que** le circuit secondaire est couplé sur un côté de la lampe opposé à la bobine primaire (L1A, L1B), à la position de la prise médiane du convertisseur en pont.

5. Ballast électronique selon la revendication 3, **caractérisé en ce que** le circuit secondaire est connecté à l'une des branches d'alimentation.

6. Ballast électronique selon l'une des revendications précédentes, **caractérisé en ce que**, pour la détection d'une moyenne du courant de la lampe, on a prévu dans le circuit secondaire un circuit RC.

7. Ballast électronique selon l'une des revendications précédentes, **caractérisé par** un circuit de correction du facteur de puissance associé au convertisseur, pour la génération des potentiels électriques d'alimentation.

8. Ballast électronique selon l'une des revendications précédentes, **caractérisé par** un circuit de commande pour l'opération de la lampe (LP).

9. Appareil d'éclairage, comprenant de préférence une lampe à décharge à haute pression, **caractérisé par** un ballast électronique selon l'une des revendications précédentes.
